# EUROPEAN PATENT SPECIFICATION

(11) **EP 2 760 730 B1**
(45) Date of publication and mention of the grant of the patent: **12.04.2017**
(21) Application number: 12791281.4
(22) Date of filing: 27.09.2012
(51) Int. Cl.: B63B 59/02, F15B 15/10, F16J 3/06

(54) **SIMPLIFIED ACTUATION DEVICE FOR MOVING FENDER MEMBERS**
VEREINFACHTE BETÄTIGUNGSVORRICHTUNG ZUM BEWEGEN VON FENDERELEMENTEN
DISPOSITIF D'ACTIONNEMENT SIMPLIFIÉ POUR DÉPLACER DES ÉLÉMENTS DE DÉFENSE D'EMBARCATION

(30) Priority: 27.09.2011 IT VI20110257
(43) Date of publication of application: 06.08.2014
(73) Proprietor: B. Financial S.r.L., 24067 Sarnico (BG) (IT)
(72) Inventor: BESENZONI Giovanni, 24067 SARNICO (BG) (IT)
(74) Representative: Burchielli, Riccardo
(86) International application number: PCT/IT2012/000297
(87) International publication number: WO 2013/046241

(56) References cited:
- EP-A2- 0 987 176
- DE-A1- 19 548 836
- DE-B- 1 090 588
- FR-A1- 2 515 295
- FR-A1- 2 810 624
- US-A- 3 082 792

## Description

The present invention relates to a simplified actuation device for moving fender members, which are used for protecting boats during the mooring, the landing and/or the starting near a pier, a wharf or a landing stage of a harbor.

It is known that the mooring and the landfall of a boat, as well as also the starting of a boat, even if partially, constitute maneuvers which are rather laborious and in any case not always easy to perform, especially if around the landing area for mooring the boat there are other boats or service boats, even stationary, to which the moving boat necessarily must be placed alongside.

This is particularly true when a boat is being moored at a pier or at a quayside of a harbor or also when the boat must be moored close to other stationary boats, especially in a restricted area between two boats.

The difficulty is mainly due to two reasons: the unstable nature of the surface on which the boat moves (water) and the direction according to which the boat is moved in such a situation (almost always the reverse is used), in order to obtain a correct, efficient and quick mooring.

Therefore, despite the attention paid by the driver when maneuvering the boat, said moving boat often bumps accidentally against neighboring structures, with the obvious drawbacks that this situation could lead to the structural integrity of either the boat and the other structures.

In addition, in order to limit said adverse and dangerous drawbacks, the boat driver has to perform slowly and to repeat several times said maneuvers, thus increasing inevitably time for the mooring.

The drawbacks related to the effects of accidental collisions are also found when the boat is already fully moored.

In fact, in this case they are already known several fender members, constituting mostly by inflatable bodies or bodies filled with a spongy material, which eliminate or strongly limit the drawbacks associated with the collisions between boats.

However, said fender members, which protrude from the side of the boat or which are directly mounted on the dock or pier, give protection to the boat from accidental impacts only in static situations (i.e. when the boat is already moored), because they are not suitable for dynamic situations, i.e. when the boat is still moving.

The nautical manufacturing companies have recently placed on the market fender members with a more sophisticated constructive structure (including shock-absorbing bodies, sliding rollers and/or bumpers), which, once arranged protruding from the boat, effectively carry out their protection function also during the last phase of mooring, i.e. when the boat is still moving.

The fender members are moved automatically between a rest condition (not in use) and an operating condition (of use), by means of driving mechanical groups, which are possibly actuated by control means, such as a hydraulic unit, available to the operator (for example the boat's captain).

The driving mechanical groups are housed in a containing compartment formed in the hull of the boat when the fender members are not in use and they have the above mentioned rest position, while they only partially protrude from the side of the boat when the fender members are placed in the operating condition.

Prior art documents DE1090588B, DE19548836A1, US3082792A and FR2810624A1 disclose driving systems for moving boat protection fender members having the technical features of the preamble of the appended claim 1.

However, the known driving systems for moving the boat protection fender members have some drawbacks.

The main drawback of the prior art derives from the fact that, as the fender members are placed externally and laterally with respect to the boat, carrying out the boat protection is rather laborious and articulated, although said placement often takes place mechanically and automatically.

A second drawback of the prior art is constituted by the fact that the known driving structures, even if they are suitably from a mechanical point of view, however, they involve a certain instability of the protective fender members when they are in use and therefore when they protrude from the side of the boat to protect it from accidental bumps.

Another drawbacks of the prior art driving groups, which are able to move protective fender members during the mooring, landing and/or starting phases, depends on their articulated and complex constructive structure, which makes them not much attractive and/or acceptable by the market, not only for the inevitable high costs but also for the complexity of the excavation works that must be performed on the side of the boat in order to make the containing compartment.

The present invention overcomes the above mentioned drawbacks of the prior art.

In particular, a main object of the present invention is to provide a simplified actuation device for moving fender members which are able to protect boats during the mooring and/or the landing that allows to reduce time, with respect to the prior art, which is required to arrange said fender members between a rest position and an operating position.

A further object of the present invention is to provide a simplified actuation device for moving fender members which is able to give a greater stability of said fender members, with respect to the known devices, when the fender members are in use.

A further object of the present invention is to provide a simplified actuation device for moving fender members which can be installed permanently on any type of boats, even on smaller boats, such as a sailboat.

Another object of the invention is to provide a simplified actuation device for moving fender members, which has a simple structure, with respect to similar known prior art devices.

Within the mentioned objects, it is a task of the present invention to provide a simplified actuation device for moving fender members that, at the same costs of the employed labor, has costs and production and installation times that are lower than known similar devices.

It is another task of the invention to provide a simplified actuation device for moving fender members that is more acceptable by customers compared to analogous prior art devices.

The above mentioned objects are obtained by a simplified actuation device for moving fender members, which are able to protect boats during the mooring and/or the landing, as claimed in the attached claim 1.

Other technical and constructive features of the simplified actuation device of the invention are mentioned in the dependent claims.

Advantageously, the simplified actuation device for moving fender members of the invention has a simple structure, with respect to the prior art devices, thanks to the particular realization of its movement means.

Consequently, production and installation costs and times are lower than those of known equivalent devices: in this respect, it is here emphasized the considerable simplification of the actuating device of the present invention, especially in relation to the works to be performed on site regarding the excavation of the containing compartment provided in the hull of the boat.

Advantageously, the improved device of the present invention, due to the simple structure and to the operating system, is more acceptable by sailing customers with respect to similar prior art devices.

Moreover, still advantageously, the simplified actuation device for moving fender members of the present invention ensures a greater stability, with respect to the known similar devices, of the fender members to which is coupled, especially when said members are in use.

Also advantageously, the simplified actuation device for moving fender members of the invention can be installed permanently on any boat and even in boats of small size, such as the sailboats.

The above mentioned objects and advantages shall become clear from the following description relating to a preferred embodiment of the simplified actuation device for moving fender members, which is the object of the present invention, and with reference to the attached drawings, in which:
- figure 1 is a perspective view of the simplified actuation device of the invention;
- figure 2 is a view of a particular of figure 1;
- figure 3 is a rear view of figure 1;
- figure 4 is a front elevation view of figure 1;
- figure 5 is a section view taken along the section plane AA of figure 4, wherein the moving means are in a rest position and the fender members are not in use;
- figure 6 is a view similar to the view shown in figure 5, with the moving means in an intermediate position and the fender member in a position prior to the use condition;
- figure 7 is a view similar to the views shown in figures 5 and 6 with the movement means in an operating position and the fender members in use;
- figure 8 is the view of figure 4 according to the section plane BB, with the movement means in a position corresponding to the position shown in figure 5;
- figure 9 is a view similar to the view shown in figure 8 with the movement means in a position corresponding to the position shown in figure 6;
- figure 10 is a view similar to the views shown in figures 8 and 9 with the moving means in a position corresponding to the position shown in figure 7.

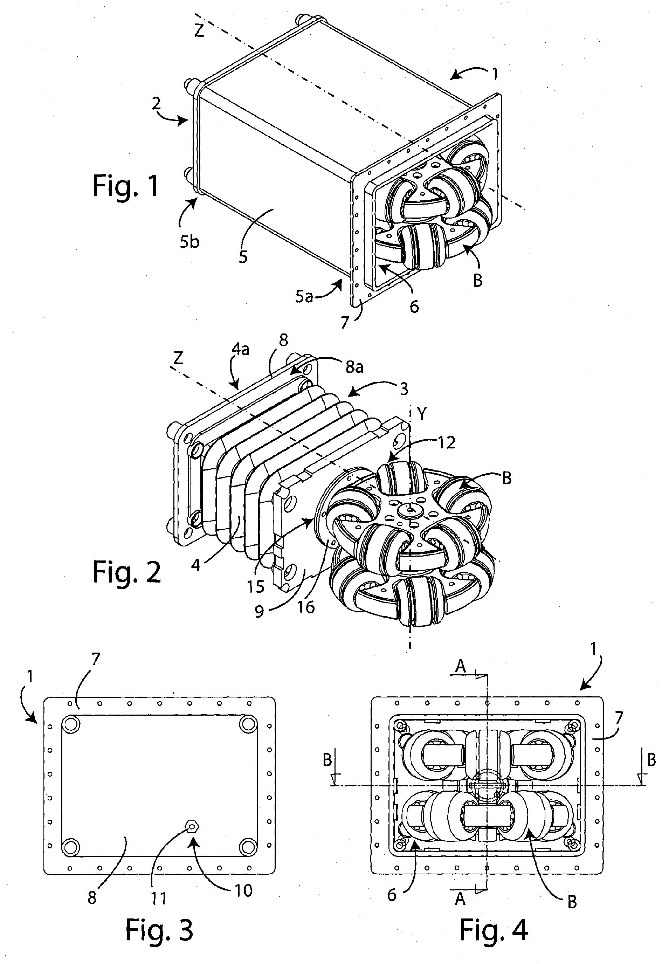

The simplified actuation device of the present invention is shown in figure 1, where it is globally indicated with 1.

First of all, it should be noted that the simplified actuation device 1 of the invention is able to move a fender member, for example of the type indicated with B in the attached figures, and is typically used for the protection of boats (not shown in the attached drawings) during the mooring and/or, more generally, the landing on a rest area, such as a pier, a quayside or a dock of a harbor.

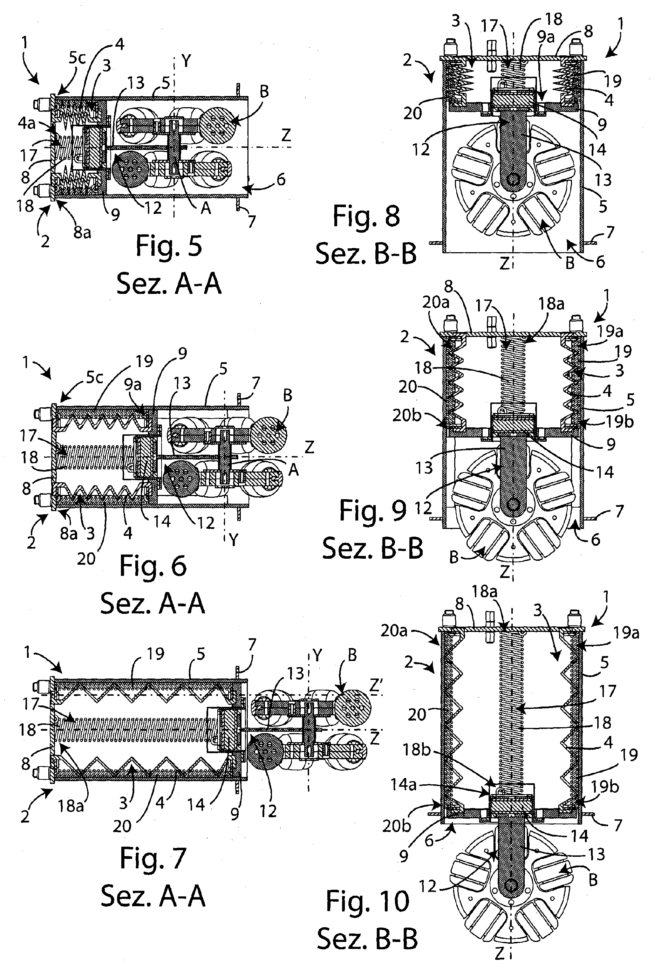

As can be seen, the simplified actuation device 1 of the invention includes:
- a supporting frame 2 able to be coupled to the side of the boat and typically and preferably within a containing compartment formed in the prow and/or stern area of the boat;
- moving means, generally indicated with 3, coupled to the supporting frame 2 and able to support the fender member B to move it between a rest position (shown in figures 5 and 8), according to which the fender member B is included in the size of the boat, and an operating position (shown in figures 7 and 10), according to which the fender member B completely protrudes from the boat's side to protect it from accidental collisions during the mooring and/or the landing.

According to the invention, the moving means 3 comprise a hollow flexible and expandable body 4, which is operatively connected to activation pneumatic means, not shown, that place it between a rest position (shown in figures 5 and 8), according to which the hollow body 4 is devoid of air in order to place the fender member B in the rest position, and an operating position (shown in figures 7 and 10), according to which the hollow body 4 is filled with air to place the fender member B in an operating or use position.

In particular, the hollow flexible and expandable body 4 is included in the size of the supporting frame 2 when it is in said rest position.

In fact, the supporting frame 2 includes a box-like enclosure 5 which has for example the shape of a parallelepiped, as shown in figure 1, and is suitable to be housed in a containing compartment formed in the hull of the boat.

In correspondence with a first end 5a, the box-like enclosure 5 also has a front mouth 6, also shown in figure 4, through which the fender member B protrudes and re-enter in order to be arranged in a rest/use position; the front mouth 6 is surrounded by a protruding frame 7 suitable to be arranged externally and close to the side of the boat in order to ensure a suitable water-tight.

Preferably but not necessarily, the hollow flexible and expandable body 4 has a bellow structure.

Furthermore, the flexible and expandable hollow body 4 is made of a rubber-based material and defines a longitudinal symmetry axis Z coinciding with the longitudinal symmetry axis of the box-like enclosure 5.

Functionally, it is possible to consider that the volume defined by the flexible and expandable hollow body 4 is minimum in the rest position of said hollow body 4, as shown in figures 5 and 8, and maximum in the operating position of the hollow body 4, as shown in figures 7 and 10.

The flexible and expandable hollow body 4 is fixed on one side to a rear closing plate 8, positioned at a second end 5b of the box-like enclosure or case 5 and suitable to be stably coupled to the bottom wall of the containing compartment of the hull.

On the opposite side, the flexible and expandable hollow body 4 is fixed to a front plate 9, adapted to be contained in the containing compartment in said rest position of the hollow body 4 and to protrude outside the box-like case 5, near the front mouth 6, in the operating position of said hollow body 4.

More specifically, the rear closing plate 8 is provided with an inner face 8a facing the internal volume of the hollow body 4 and having a peripheral annular sector 8c, which is positioned against the perimeter edge 5c of the box-like case 5.

In turn, the front plate 9 is free to slide inside the box-like case 5 along the longitudinal symmetry axis Z.

With regard to the above mentioned actuating pneumatic means, they are of a known type for a skilled man and are constituted for example by a pneumatic circuit which is installed on board the boat (generally comprising a compressor).

The actuating pneumatic means communicate with the internal volume of the flexible and expandable hollow body 4 via a through hole 10 formed in the rear closing plate 8, as shown in figure 3.

Preferably, the actuating pneumatic means comprise a control valve 11 placed at said through hole 10 of the rear closing plate 9: the control valve 11 performs the function of regulating the passage of air from/to the flexible and expandable hollow body 4 to move consequently the fender member B.

From a constructive point of view, the simplified device 1 of the invention also comprises connection means, shown in figures 5-10 where they are generally indicated with 12, that are associated with the flexible and expandable hollow body 4 and that are suitable to support the fender member B.

In particular, the connection means 12 are coupled to the front plate 9 and are therefore interposed between the fender member B and the flexible and expandable hollow body 4.

In a preferred embodiment of the invention, the connecting means 12 include a support arm 13 which extends predominantly along a direction parallel to the longitudinal symmetry axis Z of the hollow body 4 and which is substantially perpendicular to the main axis Y of a main shaft A belonging to the fender member B to which the support arm 13 is coupled.

More in detail, the support arm 13 is constituted by a tubular foil which gives flexibility to the element, making it comparable to a further damping element.

Advantageously, the connecting means comprise an elastic cushioning joint 14, which is arranged inside and in correspondence of the axial zone 4a of the flexible and expandable hollow body 4 and which is suitable to cushion the collisions suffered by the fender member B.

The shock-absorbing elastic joint 14, which is preferably made of a plastic material, for example rubber or polyvinylchloride (PVC), is located near the inner face 9a facing the internal volume of the hollow body 4 and belonging to the front plate 9, which, as shown in figure 2, has an axial through opening 15 closed by a central flange 16.

According to the preferred embodiment of the invention, the flexible and expandable hollow body 4 comprises internal elastic recovery means, generally indicated with 17 in figures 5-10, that are suitable to retract the fender member B within the size of the boat when the actuating pneumatic means bring back the flexible and expandable hollow body 4 in the rest position by means of a suction operation of the air contained therein and previously introduced.

Therefore, the actuating pneumatic means bring back the fender member B inside the box-like case 5, which preferably constitutes the supporting frame 2.

Preferably, the elastic recovery means 17 comprise an axial spring 18 provided with a first end 18a secured to the inner face 8a of the rear or back plate 8 and with a second end 18b secured to the inner surface 14a of the cushioning elastic joint 14.

According to the preferred embodiment of the invention, the elastic recovery means 17 also include a pair of peripheral auxiliary springs 19, 20 symmetrically arranged with respect to the longitudinal axis of symmetry Z.

Each of said peripheral auxiliary springs 19, 20 extends along a linear axis Z', which is parallel to the longitudinal axis of symmetry Z along which the axial spring 18 is arranged, and is provided with a first end 19a, 20a constrained to the inner face 8a of the rear plate 8 and with a second end 19b, 20b constrained to the inner face 9a of the front plate 9.

It is understood, however, that in other embodiments of the simplified actuation device of the invention, not shown, the elastic recovery means may include a number of peripheral auxiliary springs other than two, said number being variable and starting from one.

As clearly mentioned above, the flexible and expandable hollow body 4 has at first a rest position shown in figures 5 and 8, according to which it is totally included in the box-like case 5 housed in the containing compartment built into the hull of the boat.

If necessary, the actuating pneumatic means, when they are activated by the operator through control means, that are available for example in the captain's cabin of the boat, are able to pump compressed air into the flexible and expandable hollow body 4, causing an axial expansion along the longitudinal axis Z and a progressive elongation within the box-like case 5.

It follows that the fender member B protrudes from the box-like case 5 and, consequently, from the size of the boat, gradually passing from the position shown in figures 5 and 8 to the position shown in figures 7 and 10, through a series of intermediate positions shown, as an example, in figures 6 and 9.

When the filling of the flexible and expandable hollow body 4 with compressed air is over, the hollow body 4 has reached an operating end position and the fender member B is in a use or operating position and is ready to protect the boat during the mooring and/or the landing at a pier, at a wharf or at a quayside.

During the expansion of the flexible and expandable hollow body 4, the axial spring 18 and the peripheral auxiliary springs 19, 20, which preferably belong to the elastic return means 17, are gradually compressed.

In order to bring again the fender member B in the rest position and the flexible and expandable hollow body 4 in the rest position, both inside the box-like case 5, the actuating pneumatic means suck air from the hollow body 4 until the body 4 takes again the configuration of figures 5 and 8.

The mechanical energy stored by the axial spring 18 and by the peripheral auxiliary springs 19, 29 of the elastic return means 17, during the preceding phase of expansion when the flexible and expandable hollow body 4 has been filled with compressed air, allows to bring back the fender member B in a rest position, said fender member B being able to slide along the longitudinal axis of symmetry X in a direction opposite to the previous one.

According to the above description, it is understood, therefore, that the simplified actuation device for moving fender members of the invention achieves the objects and realizes the advantages mentioned above.

In fact, the simplified actuation device for moving fender members according to the invention, thanks to its simple construction, with respect to the prior art, allows to reduce, with respect to the prior art devices, the time required to arrange or move a fender member between a rest and an operating positions.

Upon implementation, changes may be made to the simplified actuation device for moving fender members of the invention; they may consist, for example, in a support frame having a different structure with respect to the structure previously described and illustrated in the attached drawings.

Furthermore, in other embodiments of the invention, not shown in the attached drawings, the simplified actuation device for moving fender members will be able to move the fender member so that it protrudes only partially from the side of the boat in an operating position, in order to protect the boat from accidental and dangerous collisions.

It should be noted that the actuating pneumatic means may include a pneumatic circuit of any type, depending on the design choices and/or requirements.

Finally, it is clear that numerous other variations may be made to the simplified actuation device for moving fender members of the present invention, without thereby departing from the scope of the appended claims.

Where the technical features mentioned in the following claims are indicated by reference numbers or signs, those reference signs have been introduced with the sole purpose of increasing the intelligibility of the claims themselves and, consequently, they have no limiting effect on the interpretation of each element identified by said reference signs.

## Claims

1. An actuation device (1) which is configured for moving fender members (B) used to protect boats comprising
- a support frame (2), which is configured to be coupled with the wall of said boat and which includes a box-like enclosure (5) configured to be housed in a containing compartment formed in the hull of the boat and having a front inlet (6), which is surrounded by a protruding frame (7) suitable to be externally placed close to said wall of said boat in order to ensure water tightness,
- a fender member (B), configured to re-enter in or come out from said front inlet (6), in order to be placed in a non-use/use position,
- moving means (3), which are coupled with said support frame (2) and which support said fender member (B) in order to move it between said non-use position and said use position, in which said fender member (B) at least partially protrudes from said wall of said boat in order to protect it from accidental impacts during mooring and/or landing,
- wherein said moving means (3) include a flexible and expandable hollow body (4) operatively connected with pneumatic activation means which place it between a rest position, in which the volume defined by said flexible and expandable hollow body (4) is minimal and said fender member (B) is placed in said non-use position, and an operating position, in which said flexible and expandable hollow body (4) is filled with air, so that the volume defined by said flexible and expandable hollow body (4) is maximum and said fender member (B) is placed in said use position,
- wherein in said rest position said flexible and expandable hollow body (4) is included in the size of said support frame (2) and said fender member (B) re-enters within said box-like enclosure (5) through a front mouth (6) of said box-like enclosure (5), thus re-entering within the overall dimensions of said boat,
- **characterized in that** connection means (12), associated with said flexible and expandable hollow body (4) with which they cooperate, are configured to support said fender member (B), said connection means (12) including an elastic shock-absorbing coupling (14), placed inside and at an axial zone (4a) of said hollow body (4), suitable to deaden the impacts suffered by said fender member (B).

2. Device (1) according to claim 1, **characterized in that** said flexible and expandable hollow body (4) has a bellow structure.

3. Device (1) according to any of the preceding claims, **characterized in that** said flexible and expandable hollow body (4) is made of rubber-based material and defines a longitudinal symmetry axis (Z).

4. Device (1) according to any of the preceding claims, **characterized in that** said flexible and expandable hollow body (4) is fixed on one side to a rear closure plate (8), arranged at a second end (5b) of said box-like enclosure (5) and suitable to be firmly coupled with the bottom wall of said containing compartment and, on the other side, to a front plate (9), suitable to be contained in said containing compartment in said rest position of said hollow body (4) and to face outwardly of said box-like enclosure (5), near said front inlet (6), in said operating position of said hollow body (4).

5. Device (1) according to claim 4, **characterized in that** said rear closure plate (8) is provided with an inner surface (8a) facing the inner volume of said hollow body (4) and having a peripheral annular sector (8c) placed close to the perimetric edge (5c) of said box-like enclosure (5) and said front plate (9) is free to slide in said box-like enclosure (5) along said longitudinal symmetry axis (Z).

6. Device (1) according to claim 4 or 5, **characterized in that** said pneumatic activation means communicate with the inner volume of said flexible and expandable hollow body (4) through an access through hole (10) made in said rear closure plate (8).

7. Device (1) according to claim 6, **characterized in that** said pneumatic activation means include an adjusting valve (11) disposed at said access through hole (10) of said rear closure plate (8) and suitable to adjust the air flow to/from said flexible and expandable hollow body (4).

8. Device (1) according to any of the preceding claims, **characterized in that** said shock-absorbing coupling (14) is placed close to an inner face (9a), which faces the inner volume of said hollow body (4), of said front plate (9), which has an axial through opening (15) closed by a central flange (16).

9. Device (1) according to any of the preceding claims, **characterized in that** said flexible and expandable hollow body (4) includes inside elastic recovery means (17) suitable to return said fender member (B) within said overall dimensions of said boat when said pneumatic actuation means bring said flexible and expandable hollow body (4) back to said rest position, by sucking the air in it contained.

10. Device (1) according to claim 9, **characterized in that** said elastic recovery means (17) includes an axial spring (18) provided with a first end (18a) bound to said inner face (8a) of said rear plate (8) and a second end (18b) bound to the inner surface (14a) of said flexible shock-absorbing coupling (14).

11. Device (1) according to claim 9 or 10, **characterized in that** said elastic recovery means (17) include at least one peripheral auxiliary spring (19, 20) which develops along a linear axis (Z') parallel to said axis longitudinal symmetry axis (Z) and is provided with a first end (19a, 20a) bound to said inner face (8a) of said rear plate (8) and a second end (19b, 20b) bound to said inner face (9a) of said front plate (9).

## Patentansprüche

1. Betätigungsvorrichtung (1), die konfiguriert ist, Fenderelemente (B) zu bewegen, die verwendet werden, um Boote zu schützen, umfassend
- einen Stützrahmen (2), der eingerichtet ist, mit der Bootwand gekoppelt zu sein und der ein kastenartiges Gehäuse (5) enthält, das eingerichtet ist, in einem Aufbewahrungsabteil beherbergt zu sein, das im Bootsrumpf gebildet ist, und einen Fronteinlass (6) hat, der durch einen hervorstehenden Rahmen (7) umgeben ist, der geeignet ist, außen nahe der Bootswand platziert zu werden, um Wasserdichtigkeit zu garantieren,
- ein Fenderelement (B), das eingerichtet ist, sich in den Fronteinlass (6) hinein oder aus diesem heraus zu bewegen, um in einer Nicht-Verwendungs-/Verwendungsposition platziert zu sein,
- Bewegungsmittel (3), die mit dem Stützrahmen (2) verbunden sind und die das Fenderelement (B) stützen, um es zwischen der Nicht-Verwendungsposition und der Verwendungsposition, in der das Fenderelement (B) zumindest teilweise von der Bootswand hervorsteht, zu bewegen, um es vor versehentlichen Zusammenstößen während des Verankerns und/oder Anlegens zu schützen,
- wobei die Bewegungsmittel (3) einen flexiblen und erweiterbaren Hohlkörper (4) enthalten, der betriebsfähig mit pneumatischen Aktivierungsmitteln verbunden ist, die ihn zwischen einer Ruheposition, in der das Volumen, das durch den flexiblen und erweiterbaren Hohlkörper (4) definiert ist, minimal ist und das Fenderelement (B) in der Nicht-Verwendungsposition platziert ist, und einer Betriebsposition platzieren, in der der flexible und erweiterbare Hohlkörper (4) mit Luft gefüllt ist, sodass das Volumen, das durch den flexiblen und erweiterbaren Hohlkörper (4) definiert ist, maximal ist und das Fenderelement (B) in der Verwendungsposition platziert ist,
- wobei in der Ruheposition der flexible und erweiterbare Hohlkörper (4) in der Größe des Stützrahmens (2) enthalten ist und das Fenderelement (B) sich durch eine Frontöffnung (6) des kastenartigen Gehäuses (5) in das kastenartige Gehäuse (5) zurückbewegt, wobei es dadurch in die Gesamtausmaße des Boots zurückkehrt,
**dadurch gekennzeichnet, dass** Verbindungsmittel (12), die dem flexiblen und erweiterbaren Hohlkörper (4) zugehörig sind, mit dem sie zusammenwirken, eingerichtet sind, das Fenderelement (B) zu stützen, wobei die Verbindungsmittel (12) eine elastische stoßdämpfende Kopplung (14) enthalten, die innen und bei einer Axialzone (4a) des Hohlkörpers (4) platziert ist, geeignet die Zusammenstöße, die das Fenderelement (B) erleidet, abzuschwächen.

2. Vorrichtung (1) nach Anspruch 1, **dadurch gekennzeichnet, dass** der flexible und erweiterbare Hohlkörper (4) eine Balgstruktur hat.

3. Vorrichtung (1) nach einem der vorangehenden Ansprüche, **dadurch gekennzeichnet, dass** der flexible und erweiterbare Hohlkörper (4) aus einem Material auf Kautschukbasis besteht und eine Längssymmetrieachse (Z) definiert.

4. Vorrichtung (1) nach einem der vorangehenden Ansprüche, **dadurch gekennzeichnet, dass** der flexible und erweiterbare Hohlkörper (4) an einer Seite an einer hinteren Abschlussplatte (8), die an einem zweiten Ende (5b) des kastenartigen Gehäuses (5) angeordnet ist, und geeignet ist, fest mit der Bodenwand des Aufbewahrungsabteils gekoppelt zu sein, und an der anderen Seite an einer Frontplatte (9), die geeignet ist, in der Ruheposition des Hohlkörpers (4) im Aufbewahrungsabteil enthalten zu sein und in der Betriebsposition des Hohlkörpers (4) vom kastenartigen Gehäuse (5), nahe dem Fronteinlass (6), nach außen zu zeigen, fixiert ist.

5. Vorrichtung (1) nach Anspruch 4, **dadurch gekennzeichnet, dass** die hintere Abschlussplatte (8) mit einer Innenfläche (8a) bereitgestellt ist, die zum Innenvolumen des Hohlkörpers (4) zeigt und einen peripheren ringförmigen Sektor (8c) hat, der nahe der perimetrischen Kante (5c) des kastenartigen Gehäuses (5) platziert ist, und die Frontplatte (9) frei im kastenartigen Gehäuse (5) entlang der Längssymmetrieachse (Z) gleiten kann.

6. Vorrichtung (1) nach Anspruch 4 oder 5, **dadurch gekennzeichnet, dass** die pneumatischen Aktivierungsmittel durch ein Zugangsdurchlassloch (10), das in der hinteren Abschlussplatte (8) gebildet ist, mit dem Innenvolumen des flexiblen und erweiterbaren Hohlkörpers (4) kommunizieren.

7. Vorrichtung (1) nach Anspruch 6, **dadurch gekennzeichnet, dass** die pneumatischen Aktivierungsmittel ein Regulierungsventil (11) enthalten, das beim Zugangsdurchlassloch (10) der hinteren Abschlussplatte (8) angeordnet ist und geeignet ist, den Luftstrom zum/vom flexiblen und erweiterbaren Hohlkörper (4) zu regulieren.

8. Vorrichtung (1) nach einem der vorangehenden Ansprüche, **dadurch gekennzeichnet, dass** die stoßdämpfende Kopplung (14) nahe einer Innenfläche (9a), die zum Innenvolumen des Hohlkörpers (4) zeigt, der Frontplatte (9), die eine axiale Durchlassöffnung (15) hat, die durch einen zentralen Flansch (16) geschlossen ist, platziert ist.

9. Vorrichtung (1) nach einem der vorangehenden Ansprüche, **dadurch gekennzeichnet, dass** der flexible und erweiterbare Hohlkörper (4) innenliegende elastische Rückholmittel (17) enthält, die geeignet sind, das Fenderelement (B) in die Gesamtausmaße des Boots zurückzubewegen, wenn die pneumatischen Aktivierungsmittel den flexiblen und erweiterbaren Hohlkörper (4) durch Absaugen der darin enthaltenen Luft wieder in die Ruheposition bringen.

10. Vorrichtung (1) nach Anspruch 9, **dadurch gekennzeichnet, dass** die elastischen Rückholmittel (17) eine axiale Feder (18) enthalten, die mit einem ersten Ende (18a), das an die Innenfläche (8a) der hinteren Platte (8) gebunden ist, und einem zweiten Ende (18b), das an die Innenfläche (14a) der flexiblen stoßdämpfenden Kopplung (14) gebunden ist, bereitgestellt ist.

11. Vorrichtung (1) nach Anspruch 9 oder 10, **dadurch gekennzeichnet, dass** die elastischen Rückholmittel (17) zumindest eine periphere Hilfsfeder (19, 20) enthalten, die sich entlang einer linearen Achse (Z') ausdehnt, die parallel zur Längssymmetrieachse (Z) ist, und mit einem ersten Ende (19a, 20a), das an die Innenfläche (8a) der hinteren Platte (8) gebunden ist, und einem zweiten Ende (19b, 20b), das an die Innenfläche (9a) der Frontplatte (9) gebunden ist, bereitgestellt ist.

## Revendications

1. Dispositif d'actionnement (1) qui est configuré pour déplacer des éléments (B) faisant office de ballons de défense utilisés pour protéger des bateaux, comprenant :
- un cadre de support (2) qui est configuré pour être accouplé à la paroi dudit bateau et qui englobe une enceinte (5) en forme de boîte, configurée pour venir se loger dans un compartiment contenant formé dans la coque du bateau et possédant une entrée avant (6) qui est entourée par un cadre faisant saillie (7) approprié pour venir se placer en position externe à proximité de ladite paroi dudit bateau dans le but de garantir une résistance à l'eau ;
- un élément (B) faisant office de ballon de défense configuré pour rentrer ou ressortir en passant par ladite entrée avant (6) dans le but de venir se placer dans une position de non utilisation/utilisation ;
- des moyens de déplacement (3) qui sont couplés audit cadre de support (2) et qui supportent ledit élément (B) faisant office de ballon de défense dans le but de déplacer ce dernier entre ladite position de non utilisation et ladite position d'utilisation, dans lequel ledit élément (B) faisant office de ballon de défense fait saillie au moins en partie par rapport à ladite paroi dudit bateau dans le but de protéger ce dernier contre des chocs accidentels lors de l'amarrage et/ou de l'accostage ;
- dans lequel lesdits moyens de déplacement (3) englobent un corps creux flexible et expansible (4) relié de manière opérationnelle à un moyen d'activation pneumatique qui le place entre une position de repos dans laquelle le volume défini par ledit corps creux flexible et expansible (4) est minimal et ledit élément (B) faisant office de ballon de défense est placé dans ladite position de non utilisation, et une position d'exploitation dans laquelle ledit corps creux flexible et expansible (4) est rempli avec de l'air, d'une manière telle que le volume défini par ledit corps creux flexible et expansible (4) est maximal et ledit élément (B) faisant office de ballon de défense est placé dans ladite position d'utilisation ;
- dans lequel, dans ladite position de repos, ledit corps creux flexible et expansible (4) est inclus dans la dimension dudit cadre de support (2) et ledit élément (B) faisant office de ballon de défense rejoint l'intérieur de ladite enceinte (5) en forme de boîte en empruntant une ouverture avant (6) de ladite enceinte (5) en forme de boîte pour ainsi réintégrer les dimensions globales dudit bateau ;
**caractérisé en ce que** des moyens de liaison (12) associés audit corps creux flexible et expansible (4) avec lequel ils coopèrent, sont configurés pour supporter ledit élément (B) faisant office de ballon de défense, lesdits moyens de liaison (12) englobant un couplage élastique (14) absorbant les chocs, placé à l'intérieur et dans une zone axiale (4a) dudit corps creux (4), approprié pour amortir les chocs subis par ledit élément (B) faisant office de ballon de défense.

2. Dispositif (1) selon la revendication 1, **caractérisé en ce que** ledit corps creux flexible et expansible (4) possède une structure en forme de soufflet.

3. Dispositif (1) selon l'une quelconque des revendications précédentes, **caractérisé en ce que** ledit corps creux flexible et expansible (4) est constitué d'une matière à base de caoutchouc et définit un axe de symétrie longitudinale (Z).

4. Dispositif (1) selon l'une quelconque des revendications précédentes, **caractérisé en ce que** ledit corps creux flexible et expansible (4) est fixé, d'un côté, à une plaque de fermeture arrière (8) disposée à une seconde extrémité (5b) de ladite enceinte (5) en forme de boîte et appropriée pour venir s'accoupler fermement à la paroi inférieure dudit compartiment contenant et, de l'autre côté, à une plaque avant (9) appropriée pour être contenue dans le compartiment contenant dans ladite position de repos dudit corps creux (4) et pour être orientée en direction de l'extérieur de ladite enceinte (5) en forme de boîte, à proximité de ladite entrée avant (6), dans ladite position d'exploitation dudit corps creux (4).

5. Dispositif (1) selon la revendication 4, **caractérisé en ce que** ladite plaque de fermeture arrière (8) est munie d'une surface interne (8a) orientée en direction du volume interne dudit corps creux (4) et possédant un secteur annulaire périphérique (8c) placé à proximité du bord périmétrique (5c) de ladite enceinte (5) en forme de boîte, et ladite plaque avant (9) est libre de coulisser dans ladite enceinte (5) en forme de boîte le long dudit axe de symétrie longitudinale (Z).

6. Dispositif (1) selon la revendication 4 ou 5, **caractérisé en ce que** lesdits moyens d'activation pneumatique communiquent avec le volume interne dudit corps creux flexible et expansible (4) via un trou d'accès traversant (10) réalisé dans ladite plaque de fermeture arrière (8).

7. Dispositif (1) selon la revendication 6, **caractérisé en ce que** lesdits moyens d'activation pneumatique englobent une soupape de réglage (11) disposée audit trou d'accès traversant (10) de ladite plaque de fermeture arrière (8) et appropriée pour régler l'écoulement d'air en direction/à partir dudit corps creux flexible et expansible (4).

8. Dispositif (1) selon l'une quelconque des revendications précédentes, **caractérisé en ce que** ledit couplage absorbant les chocs (14) est placé à proximité d'une face interne (9a) qui est orientée en direction du volume interne dudit corps creux (4), de ladite plaque avant (9), qui possède une ouverture de passage axiale (15) fermée par une bride centrale (16).

9. Dispositif (1) selon l'une quelconque des revendications précédentes, **caractérisé en ce que** ledit corps creux flexible et expansible (4) englobe un moyen interne (17) de reprise élastique approprié pour ramener ledit élément (B) faisant office de ballon de défense dans les limites desdites dimensions globales dudit bateau lorsque lesdits moyens d'actionnement pneumatique ramènent ledit corps creux flexible et expansible (4) en retour dans ladite position de repos, en aspirant l'air qu'il contient.

10. Dispositif (1) selon la revendication 9, **caractérisé en ce que** ledit moyen de reprise élastique (17) englobe un ressort axial (18) muni d'une première extrémité (18a) liée à ladite surface interne (8a) de ladite plaque arrière (8) et une seconde extrémité (18b) liée à la surface interne (14a) dudit couplage flexible (14) absorbant les chocs.

11. Dispositif (1) selon la revendication 9 ou 10, **caractérisé en ce que** lesdits moyens de reprise élastique (17) englobe au moins un ressort auxiliaire périphérique (19, 20) qui se déploie le long d'un axe linéaire (Z') parallèle audit axe de symétrie longitudinale (Z) et est muni d'une première extrémité (19a, 20a) liée à ladite surface interne (8a) de ladite plaque arrière (8) et une seconde extrémité (19b, 20b) liée à ladite face interne (9a) de ladite plaque avant (9).
